# EUROPEAN PATENT APPLICATION

(11) **EP 4 682 223 A1**
(43) Date of publication of application: **21.01.2026**
(21) Application number: 25305046.2
(22) Date of filing: 15.01.2025
(51) Int. Cl.: C09K 8/035, C09K 8/32

(54) **MIXTURE OF POLYMERS AS VISCOFIER IN DRILLING FLUIDS**

(71) Applicant: TotalEnergies OneTech, 92400 Courbevoie (FR)
(72) Inventor: SWOBODA, Benjamin, 69360 Solaize (FR); LANSOT, Jean-Yves, 69360 Solaize (FR); PERUMALSAMY, Jayachandran, 400710 Navi Mumbai (IN)
(74) Representative: Lavoix

(57) **Abstract**

The present invention relates to the use of a mixture of high molecular weight polymers as a viscosifier in a drilling formulation, wherein said mixture comprises:
- at least one hydrogenated polyfarnesene polymer having an average molar mass in number of at least 10,000 g/mol, and
- at least one olefin copolymer having an average molar mass in number of at least 1,000 g/mol.

## Description

The present invention concerns the field of drilling fluids. In particular, the present invention concerns the use of a mixture of polymers as viscosifier in drilling fluids.

Hydrocarbon fluids find widespread use, including use as drilling fluids. Drilling fluids are used as oil-based-muds (OBM) and water-based-muds (WBM). When used as in oil-based muds, and especially in critical cold environment, there are specific requirements with respect to the fluid, in order to operate. Notably there is a requirement for a defined viscosity, especially without the need to revert to lubricity additives, a requirement for a high flash point for safety reasons, and a requirement for a low pour point so to be able to operate in cold parts of the world.

Therefore, the viscosity for the drilling fluid is an important parameter, and this viscosity may be tuned by using a viscosifier.

The function of viscosifier in drilling fluid is to increase the viscosity and shear stress of the fluid to provide colloidal stability, remove the rocks and controls the filtration loss. Conventionally, clay based viscosifiers are utilized in the oil based drilling fluid.

There are mainly two types of clay-based viscosifiers utilized in oil based drilling mud conventionally. The first one is bentonite clay that consists of montmorillonite clay mainly. The second type is sepiolite/palygorskite clay. In addition, sodium bentonites or potassium bentonites are also used as swelling inhibitors. Apart from these, some synthetic polymers (polyacrylates, polymethacrylates), lignites, oleophilic polymers and asphaltic materials are also exploited for viscosifier application for oil based drilling mud.

However, there are few challenges for the clay in terms of the environmental impact as well as the functional limitation. As clays are not biodegradable and non-recyclable, they have a crucial impact on environmental pollution when it comes for disposal of drilling mud with clay. Additionally, the clays affect the progressive gel strength of the drilling fluids causing gel formation with time.

Apart from that, the thermal stability of the polymeric clays is not satisfactory which can impact the drilling mud rheology at high temperature.

There is thus a need for an alternative solution to the clay-based viscosifiers.

The aim of the present invention is thus to provide a new viscosifier for drilling fluids.

The aim of the present invention is also to provide a viscosifier for drilling fluids that includes high molecular weight polymers sourced from plant origin.

Therefore, the present invention relates to the use of a mixture of high molecular weight polymers as a viscosifier in a drilling formulation, wherein said mixture comprises:
- at least one hydrogenated polyfarnesene polymer having an average molar mass in number of at least 10,000 g/mol, and
- at least one olefin copolymer having an average molar mass in number of at least 1,000 g/mol.

Hence, the present invention is based on an alternative solution to the clay-based viscosifiers that includes high molecular weight polymers sourced from plant origin, in particular that includes polyfarnesene.

The mixture according to the invention used as viscosifier is a blend of two polymers. The first component is high molecular weight hydrogenated polyfarnascene (C15-C19 alkane) which originates entirely from plant source. It is inherently biodegradable, non-polar and compatible with all oil phase systems.

The second component is a synthetic polymer having a high molecular weight.

The mixture according to the invention is a partially sustainable polymeric solution that will reduce the problems with conventional clay based viscosifiers as explained above. Also, this mixture has excellent thermal stability as it is a blend of high molecular weight polymers. Furthermore, the disposal of the mud will be easier as with the usual viscosifiers as the mixture is at least partially biodegradable thanks to the presence of the polyfarnesene.

According to an embodiment, the hydrogenated polyfarnesene polymer has an average molar mass in number ranging from 10,000 g/mol to 120,000 g/mol, preferably from 20,000 g/mol to 90,000 g/mol, and more preferably from 50,000 g/mol to 80,000 g/mol. According to an embodiment, the hydrogenated polyfarnesene polymer is fully hydrogenated.

According to an embodiment, the olefin copolymer has an average molar mass in number greater than 2,000 g/mol. According to an embodiment, the olefin copolymer has an average molar mass in number of at least 3,000 g/mol. According to an embodiment, the olefin copolymer is an ethylene-propylene copolymer.

According to an embodiment, the mixture comprises from 30% to 80% by mass of the hydrogenated polyfarnesene polymer and from 20% to 70% by mass of the olefin copolymer, in relation to the total mass of said mixture, preferably from 40% to 70% by mass of the hydrogenated polyfarnesene polymer and from 30% to 60% by mass of the olefin copolymer, in relation to the total mass of said mixture.

According to an embodiment, the mixture comprises from 40% to 60% by mass of the hydrogenated polyfarnesene polymer and 40% to 60% by mass of the olefin copolymer, in relation to the total mass of said mixture, the mixture comprising preferably 50% by mass of the hydrogenated polyfarnesene polymer and 50% by mass of the olefin copolymer, in relation to the total mass of said mixture.

According to an embodiment, the drilling formulation comprises from 0.5% to 5%, preferably from 1 % to 3%, and more preferably from 1.5% to 2%, by mass, of the mixture, in comparison to the total mass of said drilling formulation.

According to an embodiment, the drilling formulation comprises a base fluid selected from the group consisting of: synthetic base oils, bio-based fluids, and mixtures thereof.

According to an embodiment, the base fluid is selected from the group consisting of:
- a base oil selected from the group consisting of: mineral, synthetic or natural, animal or vegetable oils, and mixtures thereof, in particular selected from the group consisting of oils of mineral or synthetic origin belonging to groups I to V according to the classes defined in the API classification;
- a fluid having a kinematic viscosity at 40°C from 3 to 6 mm2/s, a flash point of higher than 120°C and a pour point lower than -40°C, having a boiling point in the range of from 200°C to 400°C and a boiling range below 80°C, said fluid comprising more than 95% isoparaffins and less than 3% of naphthens by weight, a biocarbon content of at least 95% by weight, containing less than 100ppm aromatics by weight;
- a fluid having an initial boiling point in the range of from 150°C to 240°C and a final boiling point in the range of from 240°C to 300°C, said fluid comprising:
- from 70% to 95% by weight of isoparaffins, and
- from 30 to 600 ppm by weight of aromatics,
   based on the total weight of the fluid,
   said fluid comprising a biocarbon content of at least 95% by weight based on the total weight of the carbon atoms; and
- mixtures thereof.

According to an embodiment, the drilling formulation further comprises at least one additive, preferably the at least one additive is chosen among an emulsifier, an emulsion stabilizer, a salt, a viscosifier other than the high molecular weight polymers as defined above, a suspending agent, a high temperature fluid loss additive, a wetting agent, a rheology modifier, a weighting agent, water, and mixtures thereof.

According to an embodiment, the drilling formulation comprises, based on the total mass of said drilling formulation:
- from 1% to 40% by mass of base fluid(s), preferably from 5 to 30% by mass of base fluid(s),
- from 40% to 95% by mass of weighting agent(s), preferably from 50 to 90% by mass of weighting agent(s), the weighting agents being preferably barite,
- from 1% to 30% by mass of water, preferably from 2 to 20% by mass, of water,
- from 0.1% to 15% by mass of salt(s), preferably from 0.5 to 10% by mass of salt(s), at least salt being preferably calcium chloride,
- from 0.5% to 15% by mass of emulsifier(s), preferably from 1 to 10% by mass of emulsifier(s), and
- from 0.5% to 5%, preferably from 1% to 3%, and more preferably from 1.5% to 2%, by mass of the mixture of high molecular weight polymers as defined above.

As mentioned above, the present invention relates to the use of a mixture of high molecular weight polymers as a viscosifier in a drilling formulation, wherein said mixture comprises:
- at least one hydrogenated polyfarnesene polymer having an average molar mass in number of at least 10,000 g/mol, and
- at least one olefin copolymer having an average molar mass in number of at least 1,000 g/mol.

This specific mixture is thus used as a viscosifier or viscosifying agent, that is to say it allows increasing the viscosity of the drilling fluid.

This specific mixture also allows obtaining a drilling fluid with satisfying properties, especially concerning its plastic viscosity and the yield point.

The resistance to flow of a fluid is normally calculated as its plastic viscosity.

Plastic viscosity reflects the internal resistance to fluid flow due to mechanical friction between solid particles, liquid layers, and the walls of the wellbore or drill pipe. It is primarily related to the fluid's shear rate and is indicative of the fluid's dynamic behavior once it starts flowing. Plastic viscosity is measured using a rotational viscometer. Technically lower is the better and hence the drilling fluid can be easily pumped during drilling operation. Preferably, the plastic viscosity of the drilling fluid used in the invention is 20-40 and preferably 30-40 dial reading.

The yield point (YP) is a critical rheological property of drilling fluids that provides insight into their ability to transport and suspend solids under low shear conditions. It is particularly important in ensuring effective hole cleaning, maintaining suspension of cuttings, and preventing barite sag or settling of weighting materials. The yield point is a measure of the drilling fluid's initial resistance to flow due to interparticle forces. It quantifies the stress required to initiate flow in the fluid when at rest. The yield point of the drilling mud is the direct measure of its drill carrying capacity of drill cuttings while drilling. Practically, the YP is calculated from viscometer readings at 300 rpm and 600 rpm. Expected range for YP of the drilling fluid used in the invention is 15-30 and preferably 15-25 dial reading.

The protocols for measuring the plastic viscosity and calculating the yield point are explained later in the examples part.

### Hydrogenated polyfarnesene polymer

As mentioned above, the mixture used according to the invention as viscosifier in a drilling formulation comprises at least one hydrogenated polyfarnesene polymer.

This polymer is a bio-sourced polymer.

The mixture may thus comprise one single hydrogenated polyfarnesene polymer or a mixture of different hydrogenated polyfarnesene polymers.

The poly(farnesene) that is implemented in the present invention is typically a farnesene polymer which may be partially or fully hydrogenated and/or which may be functionalized, in particular at the end of the chain, for example by hydroxyl groups. Preferably, the poly(farnesene) that is implemented in the present invention is a farnesene polymer that is fully hydrogenated.

Farnesene exists in the form of different isomers, such as alpha-farnesene and beta-farnesene. Beta-farnesene may be represented by the following formula (I):

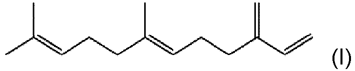

According to the invention, the poly(farnesene) has a number average molar mass ranging from 10,000 to 120,000 g/mol, preferably from 20,000 to 110,000 g/mol, more preferably from 30,000 to 100,000 g/mol, preferentially from 40,000 to 90,000 g/mol, more preferentially from 50,000 to 80,000 g/mol.

According to one embodiment, the poly(farnesene) has a number average molar mass ranging from 10,000 to 90,000 g/mol, preferably from 20,000 to 80,000 g/mol.

The number average molar mass or average molar mass in number (Mn) can be measured by means of chromatography over permeable gel ("gel permeation chromatography" as per accepted terminology), by using polystyrene standards.

The poly(farnesene) used in the invention may exhibit a viscosity at 25°C ranging from 20,000 to 1,000,000 mPa,s, preferably from 50,000 to 800,000 mPa,s, more preferably from 100,000 to 600,000 mPa.s.

Typically, the polymer used in the invention is a homopolymer of beta-farnesene.

The poly(farnesene) used according to the invention may comprise n monomers having the formula (II) and/or m monomers having the formula (III): 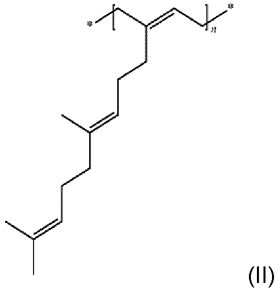 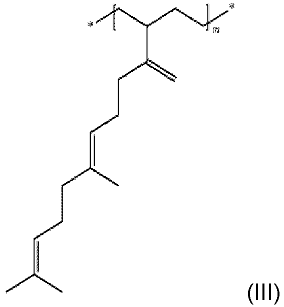 wherein n and m are independently of each other whole numbers ranging for example from 40 to 600.

According to one particular embodiment, the poly(farnesene) used according to the invention consists of monomers having the formula (II) and/or of monomers having the formula (III) as defined here above.

The poly(farnesene) used according to the invention may be functionalised at the chain-end, for example with one or two hydroxyl functions.

According to one particular embodiment, the poly(farnesene) used according to the invention is partially or fully hydrogenated. The term "partially hydrogenated poly(farnesene)" is used to refer to a poly(farnesene) that comprises at least one unsaturation but whereof a portion of the unsaturations has been hydrogenated. The term "fully hydrogenated poly(farnesene)" is used to refer to a saturated poly(farnesene) which no longer comprises unsaturations.

According to one embodiment, the polymer used in the invention is a fully hydrogenated poly(farnesene).

Thus, according to one embodiment of the invention, the poly(farnesene) polymer used according to the invention comprises n monomers having the formula (II bis) and m monomers having the formula (III bis): 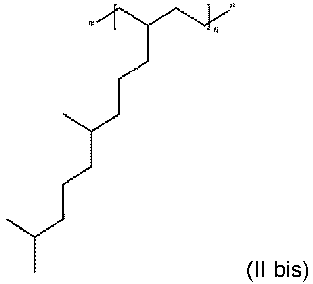 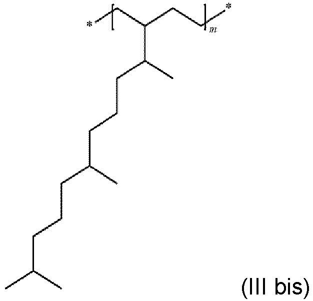 wherein n and m have the same significance as mentioned here above.

According to one particular embodiment, the poly(farnesene) used according to the invention consists of: monomers having the formula (II), and/or monomers having the formula (III) and/or monomers having the formula (II bis), and/or monomers having the formula (III bis), as defined here above.

### Method for manufacturing Poly(Farnesene) Polymer:

The poly(farnesene) is obtained from farnesene derived from biological sources. Farnesene may be obtained from insects or plants or by culturing microorganisms.

Farnesene derived from biological sources is commercially available.

The poly(farnesene) may be obtained by any known method of polymerization, for example by anionic polymerisation which serves to enable more precise control
of the molecular mass of the polymer obtained. The polymerisation may be carried out in batch or continuous process with the progressive addition of the possible initiator, the monomers, and the possible solvent.

The temperature during the polymerisation process may range from -80 to 80°C.

The poly(farnesene) may be obtained by a method described in the patent document WO2018/052709, from page 5, line 3 to page 6, line 17.

### Olefin copolymer

As mentioned above, the mixture used according to the invention as viscosifier in a drilling formulation comprises at least one olefin copolymer.

The mixture may thus comprise one single olefin copolymer or a mixture of different olefin copolymers.

As mentioned above, the olefin copolymer used according to the invention has an average molar mass in number of at least 1,000 g/mol.

The number average molar mass can be measured by means of chromatography over permeable gel ("gel permeation chromatography" as per accepted terminology), by using polystyrene standards.

Preferably, the olefin copolymer used according to the invention has an average molar mass in number greater than 2,000 g/mol, in particular strictly higher than 2,000 g/mol.

According to an advantageous embodiment, the olefin copolymer used according to the invention has an average molar mass in number of at least 3,000 g/mol. Preferably, the olefin copolymer used according to the invention has an average molar mass in number being equal to 3,000 g/mol.

The olefin copolymer used according to the invention may be copolymers based on ethylene units and propylene units, or copolymers based on ethylene units, propylene units and diene units (EPDM). Preferably, the olefin copolymer used according to the invention is an ethylene/propylene copolymer.

The olefin copolymer used according to the invention is in linear or star-shaped form, preferably in linear form. The olefin copolymer used according to the invention is in block or random form. Preferably, the olefin copolymer is in random form.

The olefin copolymer used according to the invention advantageously has an ethylene unit content ranging from 30% to 80% by weight, based on the weight of the olefin copolymer, preferably from 30% to 70%, more preferably from 40% to 70%.

The olefin copolymer used according to the invention advantageously has a propylene unit content ranging from 20% to 70% by weight, based on the weight of the olefin copolymer, preferably from 30% to 70%, more preferably from 30% to 60%.

According to a preferred embodiment, the mixture according to the invention as defined above comprises an ethylene-propylene copolymer, preferably with an average molar mass in number of at least 3,000 g/mol.

### Mixture

As mentioned above, the viscosifier (or viscosifying agent) used in the present invention is a mixture of high molecular weights polymers.

According to a preferred embodiment, the mixture comprises from 30% to 80% by mass of the hydrogenated polyfarnesene polymer and from 20% to 70% by mass of the olefin copolymer, in relation to the total mass of said mixture.

Preferably, the mixture comprises from 40% to 70% by mass of the hydrogenated polyfarnesene polymer and from 30% to 60% by mass of the olefin copolymer, in relation to the total mass of said mixture.

According to a preferred embodiment, the mixture as mentioned above comprises from 40% to 60% by mass of the hydrogenated polyfarnesene polymer and 40% to 60% by mass of the olefin copolymer, in relation to the total mass of said mixture.

Preferably, the mixture as defined above comprises preferably 50% by mass of the hydrogenated polyfarnesene polymer and 50% by mass of the olefin copolymer, in relation to the total mass of said mixture.

### Drilling formulation

As mentioned above, the present invention concerns the use of a specific viscosifier in a drilling formulation.

According to an embodiment, the drilling formulation comprises from 0.5% to 5%, preferably from 1% to 3%, and more preferably from 1.5% to 2%, by mass, of the mixture as defined above, in comparison to the total mass of said drilling formulation.

The drilling formulation or drilling fluid according to the invention is advantageously an oil-based drilling formulation, also named oil based-mud.

The present invention also relates to a drilling formulation comprising the mixture as defined above, as viscosifier.

According to an embodiment, the drilling formulation according to the invention comprises the mixture as defined above, and at least one base fluid.

### Base fluid

According to an embodiment, the drilling formulation comprises a base fluid selected from the group consisting of: synthetic base oils, bio-based fluids, and mixtures thereof.

According to an embodiment, the base fluid is selected from the group consisting of:
- a base oil selected from the group consisting of: mineral, synthetic or natural, animal or vegetable oils, and mixtures thereof;
- a fluid having a kinematic viscosity at 40°C from 3 to 6 mm²/s, a flash point of higher than 120°C and a pour point lower than -40°C, having a boiling point in the range of from 200°C to 400°C and a boiling range below 80°C, said fluid comprising more than 95% isoparaffins and less than 3% of naphthens by weight, a biocarbon content of at least 95% by weight, containing less than 100ppm aromatics by weight;
- a fluid having an initial boiling point in the range of from 150°C to 240°C and a final boiling point in the range of from 240°C to 300°C, said fluid comprising:
- from 70% to 95% by weight of isoparaffins, and
- from 30 to 600 ppm by weight of aromatics,
   based on the total weight of the fluid,
   said fluid comprising a biocarbon content of at least 95% by weight based on the total weight of the carbon atoms; and
- mixtures thereof.

As base fluid, the drilling formulation according to the invention may include a base oil selected from the group consisting of: mineral, synthetic or natural, animal or vegetable oils, and mixtures thereof.

It may be a mixture of several base oils, for example a mixture of two, three or four base oils.

The base oils that may be used as base fluid in the drilling formulation according to the invention may in particular be oils of mineral or synthetic origin belonging to groups I to V according to the classes defined in the API classification (or their equivalents according to the ATIEL classification) and presented in Table 1 below or mixtures thereof.

**Table 1**

| | Content of saturated compounds | Sulphur content | Viscosity index (VI) |
|---|---|---|---|
| Group I Mineral oils | < 90% | > 0.03% | 80 ≤ VI < 120 |
| Group II Hydrocracked oils | ≥ 90% | ≤ 0.03% | 80 ≤ VI < 120 |
| Group III Hydro-isomerized oils | ≥ 90% | ≤ 0.03% | 80 ≤ VI < 120 |
| Group IV | Polyalphaolefins (PAO) | | |
| Group V | Esters and other bases not included in groups I to IV | | |

Mineral base oils include all types of base oils obtained by atmospheric and vacuum distillation of crude oil, followed by refining operations such as solvent extraction, de-alkalization, solvent dewaxing, hydrotreating, hydrocracking, hydroisomerization and hydrofining.

Synthetic base oils can be esters of carboxylic acids and alcohols, polyalphaolefins or polyalkylene glycol (PAG) obtained by polymerization or copolymerization of alkylene oxides comprising from 2 to 8 carbon atoms, in particular from 2 to 4 carbon atoms, The polyalphaolefins used as base oils are for example obtained from monomers comprising 4 to 32 carbon atoms, for example from decene, octene or dodecene, and whose viscosity at 100°C is between 1.5 and 15 mm².s⁻¹ according to ASTM D445. Their average molecular weight is generally between 250 and 3000 according to ASTM D5296.

Mixtures of synthetic and mineral oils, which may be biobased, can also be used as base fluid in the drilling formulation according to the invention.

According to an embodiment, the base fluid in the drilling formulation according to the invention is a fluid having a kinematic viscosity at 40°C from 3 to 6 mm²/s, a flash point of higher than 120°C and a pour point lower than -40°C, having a boiling point in the range of from 200°C to 400°C and a boiling range below 80°C, said fluid comprising more than 95% isoparaffins and less than 3% of naphthens by weight, a biocarbon content of at least 95% by weight, containing less than 100ppm aromatics by weight.

As well understood by the skilled person, a boiling range below 80°C means that the difference between the final boiling point and the initial boiling point is less than 80°C.

This particular base fluid is described for example in WO 2018/078023.

According to an embodiment, the base fluid in the drilling formulation according to the invention is a fluid having an initial boiling point in the range of from 150°C to 240°C and a final boiling point in the range of from 240°C to 300°C, said fluid comprising:
- from 70% to 95% by weight of isoparaffins, and
- from 30 to 600 ppm by weight of aromatics,

based on the total weight of the fluid,
said fluid comprising a biocarbon content of at least 95% by weight based on the total weight of the carbon atoms.

Preferably, this base fluid has a boiling range from 5°C to 80°C, preferably from 10°C to 60°C, more preferably from 20°C to 40°C, and/or a kinematic viscosity at 40°C from 1 to 4 mm²/s, preferably from 1.1 to 3.0 mm²/s, more preferably from 1.2 to 2.2 mm²/s, and/or a flash point of at least 75°C, preferably at least 80°C, and/or a pour point lower than -40°C, preferably lower than -50°C.

According to an embodiment, this base fluid has a flash point lower than 110°C, and/or an aniline point of at least 80°C, and/or a density at 15°C less than 780 kg/m³, more preferably less than 765 kg/m³.

### Additives

According to an embodiment, the drilling formulation as defined above further comprises at least one additive, preferably the at least one additive is chosen among an emulsifier, an emulsion stabilizer, a salt, a viscosifier other than the high molecular weight polymers as defined above, a suspending agent, a high temperature fluid loss additive, a wetting agent, a rheology modifier, a weighting agent, water, and mixtures thereof.

According to an embodiment, the drilling formulation comprises:
- from 1% to 40% by weight of base fluid(s) as defined above, preferably from 5% to 30% by weight of the of the invention,
- from 60% to 98.5% by weight of additives selected from an emulsifier, an emulsion stabilizer, a viscosifier other than the high molecular weight polymers as defined above, a suspending agent, a high temperature fluid loss additive, a wetting agent, a rheology modifier, a weighing agent, water, and mixtures thereof, and
- from 0.5% to 5%, preferably from 1% to 3%, and more preferably from 1.5% to 2%, by mass of the mixture of high molecular weight polymers as defined above.
based on the total weight of the drilling formulation,

According to an embodiment, the drilling formulation comprises, based on the total mass of said drilling formulation:
- from 1% to 40% by mass of base fluid(s), preferably from 5 to 30% by mass of base fluid(s),
- from 40% to 95% by mass of weighting agent(s), preferably from 50 to 90% by mass of weighting agent(s), the weighting agents being preferably barite,
- from 1% to 30% by mass of water, preferably from 2 to 20% by mass, of water, the volume ratio fluid of the invention/water being preferably higher than 1.5, more preferably higher 2.0,
- from 0.1% to 15% by mass of salt(s), preferably from 0.5 to 10% by mass of salt(s), at least salt being preferably calcium chloride,
- from 0.5% to 15% by mass of emulsifier(s), preferably from 1 to 10% by mass of emulsifier(s), and
- from 0.5% to 5%, preferably from 1% to 3%, and more preferably from 1.5% to 2%, by mass of the mixture of high molecular weight polymers as defined above.

The present invention also relates to a process for increasing the viscosity of an oil-based drilling fluid, comprising the addition of the mixture of high molecular weight polymers as defined above into said drilling fluid.

The present invention is also directed to the use of the mixture of the invention in an oil-based mud also called oil-based drilling formulation, preferably in order to improve the lubricity of the drilling formulation and/or to improve the performances of the drilling formulation.

The present invention is also directed to a process of improving lubricity of a drilling formulation and/or to improve the performances of a drilling formulation, the process comprising a step of mixing the mixture as defined above of the invention with a base fluid as defined above.

The following examples illustrate the invention without limiting it.

### EXAMPLES

The following standards have been used to determine the following properties:
Density at 15°C ASTM D4052 - EN ISO 1185
Aniline point ASTM D611 - EN ISO 2977
Pour point ASTM D97 - EN ISO 3016
Flash point ASTM D93 - EN ISO 2719
Viscosity at 40°C ASTM D445 - EN ISO 3104
Aromatic content UV spectroscopy
Atmospheric distillation ASTM D86

### Example 1: Preparation of the viscosifier of the invention

The viscosifier according to the invention is prepared by mixing one hydrogenated polyfarnesene polymer (P1)(having a molar mass of 74,033 g/mol, a Mn/Mw ratio equal to 1.07, and a kinematic viscosity at 25°C equal to 506 Pa.s) with one ethylene-propylene copolymer (P2)(having a molar mass of 3,000 g/mol), in different weight ratios (50:50; 60:40; 70:30; and 40:60).
Viscosifier 1: mixture 50:50 of P1 and P2
Viscosifier 2: mixture 60:40 of P1 and P2
Viscosifier 3: mixture 70:30 of P1 and P2
Viscosifier 4: mixture 40:60 of P1 and P2

### Example 2: Preparation of drilling fluids with the viscosifier of the invention

The drilling fluids are prepared by mixing the following components: Base fluid, emulsifier, lime, water, anhydrous calcium chloride, viscosifier (1, 2, 3 or 4), filtration control agent, calcium carbonate, and barite.

The base fluid is first mixed with the emulsifier during 10 minutes, and then the lime is added and mixed during 5 minutes. Then, the water and the anhydrous calcium chloride is added and mixed with the previous mixture during 10 minutes.

The filtration control agent is then added under stirring for 5 minutes and then the calcium carbonate (as particles of 5 µm) also under stirring for 5 minutes. Lastly, the barite is added under stirring during 10 minutes, in order to obtain the final drilling fluid.

Additives are mixed using a Multimixer, with speed specified (11500 +/- 300 rpm). Each formula is calculated for 350 ml or 1 bbl. Fluids were tested before and after hot rolling (BHR and AHR). The fluid was rolled at 150°F (corresponding to 65.56°C) for 16 hours, and laboratory viscosity tests were conducted at 120°F (corresponding to 48.89°C).

The amounts of each component of the drilling fluids are mentioned in the below table:

| **Components** | **Quantity (ppg) ⁽³⁾** | **Quantity (g)** |
|---|---|---|
| **Base fluid** | 156.6 | 156.6 |
| **Emulsifier** ⁽¹⁾ | 10 | 10 |
| **Lime** (pH controller) | 6 | 6 |
| **Water** | 64.3 | 64.3 |
| **CaCl₂ anhydrous** (salt for maintaining salinity) | 21.4 | 21.4 |
| **Filtration control additive ⁽²⁾** | 2 | 2 |
| **CaCOs, 5 micron** (bridging additive) | 10 | 10 |
| **Barite** (weighting material) | 291.8 | 291.8 |

(1): Emulsifier containing the reaction product of fatty acids, tall oil fatty acid with DETA, TETA, TEPA and maleic anhydride; Fatty Acid, C18 unsaturated, Dimers, Glycol Ethers, and Aliphatic Hydrocarbons,
(2): Additive containing Maleic acid Resin, glycol ether, and fatty acid oil,
(3): ppg: pounds per barrel (/ 350 mL)

One set of drilling fluids is prepared with 6 ppb of each viscosifier (1, 2, 3, or 4) and one other set of drilling fluids is prepared with 7 ppb of each viscosifier (1, 2, 3, or 4).

As base fluids in the drilling fluids, two different fluids are used:
- Base fluid 1 (BF1):

| Properties | Unit | Base fluid 1 |
|---|---|---|
| Density at 15°C | kg/m | 816.9 |
| Aniline Point | °C | 88.1 |
| Pour point | °C | -24 |
| Flash Point (PMCC) | °C | 122 |
| Kinematic Viscosity at 40°C | mm2/s | 3.5252 |
| Aromatic Content (λ = 200 nm) | ppm | 59.7 |
| Initial Boiling Point | °C | 256.0 |
| Final Boiling Point | °C | 334.0 |

- Base fluid 2 (BF2):

| Characteristic | |
|---|---|
| Aromatic content (ppm) | <20 |
| Sulfur content (ppm) | 0.1 |
| % isoparaffins (w/w) | 95.9 |
| % n-paraffins (w/w) | 4.1 |
| % naphthenic (w/w) | 0 |
| C15 (iso) | 12.00 |
| C16 (iso) | 32.20 |
| C17 (iso) | 15.27 |
| C18 (iso) | 35.54 |
| C quat sat | 0 |
| CH sat | 10.8 |
| CH₂ sat | 68.4 |
| CH₃ sat | 20.71 |
| CH₃ long chain | 13.0 |
| CH₃ short chain | 7.78 |
| Biocarbon content (%) | 97 |
| Initial Boiling Point (°C) | 260.9 |
| Flash Point (PMCC) (°C) | 126.5 |
| Density at 15°C (kg/m³) | 781.9 |
| Kinematic Viscosity at 40°C (mm²/s) | 3.113 |
| Aniline Point (°C) | 96.5 |
| Pour point (°C) | -60 |

### Example 3: Physicochemical properties of the drilling fluids

Protocol: Viscosity measurements are done as per API 13B-1, fourth edition, March 2009 or latest or ISO 10414-1:2008 Petroleum and natural gas industries- Field testing of drilling fluids- Part 1: Water-based fluids, more precisely, on the section 6.3 determination of viscosity and gel strength using a direct-indicating viscometer. A 6 speed viscometer (Fann 35 or equivalent is used) was used, preferably FANN 45 APV (automated viscometer, from Fann company USA). Viscosity measurement was done at 120 Deg F of the following rpm's: 600; 300; 200; 100; 6; 3.

As mentioned above, fluids were tested before and after hot rolling (BHR and AHR).

From which, calculation of PV and YP are as follows:
PV = results of 600rpm - 300 rpm
YP = results of 300 rpm - PV

### Example 3.1.: Drilling fluids with viscosifier 1

| | **C1** | | **C2** | | **CC1** | | **CC2** | |
|---|---|---|---|---|---|---|---|---|
| **Base fluid** | BF1 | | | | | | | |
| **Amount of viscosifier 1 (invention)** | 6 ppb | | 7 ppb | | - | | - | |
| **Amount of comparative viscosifier** | - | | - | | 6 ppb | | 7 ppb | |
| **Mud weight (ppg)** | 13.2 | | 13.3 | | 13.2 | | 13.2 | |
| | BHR | AHR | BHR | AHR | BHR | AHR | BHR | AHR |
| **Plastic Viscosity (cP or 10⁻³ Pa.s)** | 33.8 | 35 | 37.3 | 39.4 | 37.3 | 38.9 | 39.4 | 42.4 |
| **Yield point (lb/100ft²)(Pa)** | 29.3 (14.03) | 33.3 (15.94) | 30.4 (14.56) | 33.9 (16.23) | 21 (10.05) | 31.5 (15.08) | 25.1 (12.02) | 36.4 (17.43) |
| **10-sec gel (lb/100ft²)(Pa)** | 10.2 (4.88) | 13.2 (6.32) | 11.6 (5.55) | 14.1 (6.75) | 11.7 (5.60) | 26.7 (12.78) | 15 (7.18) | 34.4 (16.47) |
| **10-min gel (lb/100ft²)(Pa)** | 11.5 (5.51) | 15.7 (7.52) | 12.7 (6.08) | 16.2 (7.76) | 19.2 (9.19) | 36.6 (17.52) | 23.3 (11.16) | 46.6 (22.31) |
| **ES at 120°F (V)** | 496 | 565 | 586 | 620 | 752 | 818 | 803 | 901 |

| | **C3** | | **C4** | | **CC3** | | **CC4** | |
|---|---|---|---|---|---|---|---|---|
| **Base fluid** | BF2 | | | | | | | |
| **Amount of viscosifier 1 (invention)** | 6 ppb | | 7 ppb | | - | | - | |
| **Amount of comparative viscosifier** | - | | - | | 6 ppb | | 7 ppb | |
| **Mud weight (ppg)** | 12.7 | | 12.7 | | 13 | | 13 | |
| | BHR | AHR | BHR | AHR | BHR | AHR | BHR | AHR |
| **Plastic Viscosity (cP or 10⁻³ Pa.s)** | 26.9 | 27.8 | 28.3 | 31.1 | 31 | 29.6 | 32.4 | 32.7 |
| **Yield point (lb/100ft²)(Pa)** | 20.9 (10.01) | 22.2 (10.63) | 25.2 (12.07) | 26.9 (12.88) | 21.7 (10.39) | 29.6 (14.17) | 29.8 (14.27) | 40.3 (19.30) |
| **10-sec gel (lb/100ft² )(Pa)** | 8.2 (3.93) | 10.2 (4.88) | 9.4 (4.50) | 9.6 (4.60) | 13.6 (6.51) | 25.8 (12.35) | 17.6 (8.43) | 33.7 (16.14) |
| **10-min gel (lb/100ft²)(Pa)** | 9.2 (4.40) | 13.2 (6.32) | 11.6 (5.55) | 11.8 (5.65) | 20.5 (9.82) | 34.3 (16.42) | 25.3 (12.11) | 43.9 (21.02) |
| **ES at 120°F (V)** | 539 | 582 | 610 | 653 | 784 | 835 | 807 | 867 |

Compositions C1, C2, C3, and C4 are compositions according to the invention, whereas compositions CC1, CC2, CC3, and CC4 are comparative compositions with a standard clay based viscosifier instead of the mixture according to the invention.

The plastic viscosity (PV) is measured as mentioned above, using a rotational viscosimeter. PV is expected as low as possible and is normally around 30-35 could be good. This low result ensures the optimum energy required to pump fluid for operation; if these values are too high, driller needs more energy to pump.

The yield point (YP) is calculated as mentioned above. YP is expected to be in the range 20-40 and is good in the fluids of the above table. This ensures the carrying capacity of the fluid. If the value of YP is in the range, the theory ensures the drill cutting can be transported nice and easy.

The average ES (Electrical Stability of the fluid) is a direct measure of emulsion stability of the fluid. This value should be greater than 350 Volts. The standard for this parameter is for example as follows: API Recommended practice 13B-2, Fourth Edition, March 2005 (section 10) or ISO 10414-2:2011.

The gel strength values t 10 Seconds and 10 Minutes are for example measuread according to the following standard: API Recommended practice 13B-2, Fourth Edition, March 2005 (section 6.3) or ISO 10414-2:2011. It is preferred to keep those values at 20 max for both cases to have smooth drilling operation.

Based on the reference, it can be concluded that the viscosifiers blends PV, YP, and ES meet the expected specifications of drilling fluid without causing excess viscosity, unlike clay-based products. In contrast, clay with the same quality results in very high viscosity, requiring more pump pressure to drill. Additionally, the yield point of clay-based mud systems is very high, which may lead to progressive gelation, making it less suitable for drilling.

More particularly, based on the above data, it appears that the PV and YP of drilling fluids with the viscosifier-1 (according to the invention) performs well in both base fluids in both concentrations. Importantly, the ES is higher than 350 volts and it ensures that the fluid emulsion is stable.

Importantly, the gel strengths at 10 seconds and 10 minutes are very low in the compositions according to the invention (especially in comparison with composiitons with clay), ensuring a better pumpability of the drilling fluid during the operation. At this same concentration, for the clay-based compositions, the measured viscosity is much higher, thus exhibiting higher pumpability needs, and even leading sometimes to drilling issues because of these progressive gels (Technical way of mentioning higher strength). Lastly, the compositions with viscosifier 1 (C1-C4) are partially biodegradable (up to 50%) and hence have a huge sustainability advantage in terms of carbon-footprint.

### Example 3.2.: Drilling fluids with viscosifier 2

| | **C5** | | **C6** | | **CC1** | | **CC2** | |
|---|---|---|---|---|---|---|---|---|
| **Base fluid** | BF1 | | | | | | | |
| **Amount of viscosifier 2 (invention)** | 6 ppb | | 7 ppb | | - | | - | |
| **Amount of comparative viscosifier** | - | | - | | 6 ppb | | 7 ppb | |
| **Mud weight (ppg)** | 13.2 | | 13.2 | | 13.2 | | 13.2 | |
| | BHR | AHR | BHR | AHR | BHR | AHR | BHR | AHR |
| **Plastic Viscosity (cP or 10⁻³ Pa.s)** | 31.2 | 31.6 | 34.1 | 34.5 | 37.3 | 38.9 | 39.4 | 42.4 |
| **Yield point (lb/100ft²)(Pa)** | 21.1 (10.10) | 24.7 (11.83) | 27.5 (13.17) | 30 (14.36) | 21 (10.05) | 31.5 (15.08) | 25.1 (12.02) | 36.4 (17.43) |
| **10-sec gel (lb/100ft²)(Pa)** | 8 (3.83) | 10.2 (4.88) | 9.9 (4.74) | 12.6 (6.03) | 11.7 (5.60) | 26.7 (12.78) | 15 (7.18) | 34.4 (16.47) |
| **10-min gel (lb/100ft²) (Pa)** | 8.7 (4.17) | 11.7 (5.60) | 11.1 (5.31) | 14.1 (6.75) | 19.2 (9.19) | 36.6 (17.52) | 23.3 (11.16) | 46.6 (22.31) |
| **ES at 120°F (V)** | 621 | 697 | 666 | 741 | 752 | 818 | 803 | 901 |

| | **C7** | | **C8** | | **CC3** | | **CC4** | |
|---|---|---|---|---|---|---|---|---|
| **Base fluid** | BF2 | | | | | | | |
| **Amount of viscosifier 2 (invention)** | 6 ppb | | 7 ppb | | - | | - | |
| **Amount of comparative viscosifier** | - | | - | | 6 ppb | | 7 ppb | |
| **Mud weight (ppg)** | 12.8 | | 12.8 | | 13 | | 13 | |
| | BHR | AHR | BHR | AHR | BHR | AHR | BHR | AHR |
| **Plastic Viscosity (cP or 10⁻³ Pa.s)** | 23.9 | 25.1 | 30.9 | 33.4 | 31 | 29.6 | 32.4 | 32.7 |
| **Yield point (lb/100ft²)(Pa)** | 15 (7.18) | 17.4 (8.33) | 25.3 (12.11) | 25.8 (12.35) | 21.7 (10.39) | 29.6 (14.17) | 29.8 (14.27) | 40.3 (19.30) |
| **10-sec gel (lb/100ft²) (Pa)** | 6.3 (3.02) | 8.7 (4.17) | 9.7 (4.64) | 9.9 (4.74) | 13.6 (6.51) | 25.8 (12.35) | 17.6 (8.43) | 33.7 (16.14) |
| **10-min gel (lb/100ft²) (Pa)** | 8.8 (4.21) | 11.7 (5.60) | 11.8 (5.65) | 12.1 (5.79) | 20.5 (9.82) | 34.3 (16.42) | 25.3 (12.11) | 43.9 (21.02) |
| **ES at 120°F (V)** | 621 | 653 | 679 | 705 | 784 | 835 | 807 | 867 |

From the above data, it can be concluded that the PV, YP, and ES of the drilling fluids with viscosifier according to the invention meet the expected specifications of drilling fluid without causing excess viscosity, unlike clay-based products. In contrast, clay with the same quality results in very high viscosity, requiring more pump pressure to drill. Additionally, the yield point of clay-based mud systems is very high, which may lead to progressive gelation, making it less suitable for drilling.

More particularly, it is evident that the PV & YP of drilling fluids with viscosifier-2 is within the expected ranges for both concentrations of BF1 & BF2. Importantly, the ES is higher than 350 volts and it ensures that the fluid emulsion is stable. Also, the gel strengths at 10 seconds and 10 minutes are very low in the compositions according to the invention (especially in comparison with composiitons with clay), ensuring a better pumpability of the drilling fluid during the operation. At this same concentration, for the clay-based compositions, the measured viscosity is very high, thus exhibiting higher pumpability needs, and even leading sometimes to drilling issues because of these progressive gels. (Technical way of mentioning higher strength).

Lastly, the compositions with viscosifier-2 (C5-C8) are biodegradable (up to 60%) and hence have a huge sustainability advantage in terms of carbon-footprint.

### Example 3.3.: Drilling fluids with viscosifier 3

| | **C9** | | **C10** | | **CC1** | | **CC2** | |
|---|---|---|---|---|---|---|---|---|
| **Base fluid** | BF1 | | | | | | | |
| **Amount of viscosifier 3 (invention)** | 6 ppb | | 7 ppb | | - | | - | |
| **Amount of comparative viscosifier** | - | | - | | 6 ppb | | 7 ppb | |
| **Mud weight (ppg)** | 13.2 | | 13.2 | | 13.2 | | 13.2 | |

| | BHR | AHR | BHR | AHR | BHR | AHR | BHR | AHR |
|---|---|---|---|---|---|---|---|---|
| **Plastic Viscosity (cP or 10⁻³ Pa.s)** | 31.7 | 34.4 | 34.5 | 34.7 | 37.3 | 38.9 | 39.4 | 42.4 |
| **Yield point (lb/100ft²)(Pa)** | 21.7 (10.39) | 23.9 (11.44) | 25.5 (12.21) | 30.5 (14.60) | 21 (10.05) | 31.5 (15.08) | 25.1 (12.02) | 36.4 (17.43) |
| **10-sec gel (lb/100ft²)(Pa)** | 8.6 (4.12) | 10.1 (4.84) | 9.9 (4.74) | 12.8 (6.13) | 11.7 (5.60) | 26.7 (12.78) | 15 (7.18) | 34.4 (16.47) |
| **10-min gel (lb/100ft²)(Pa)** | 9.5 (4,55) | 12.4 (5,94) | 10.8 (5,17) | 14.3 (6,85) | 19.2 (9.19) | 36.6 (17.52) | 23.3 (11.16) | 46.6 (22.31) |
| **ES at 120°F (V)** | 546 | 596 | 572 | 625 | 752 | 818 | 803 | 901 |

| | **C11** | | **C12** | | **CC3** | | **CC4** | |
|---|---|---|---|---|---|---|---|---|
| **Base fluid** | BF2 | | | | | | | |
| **Amount of viscosifier 3 (invention)** | 6 ppb | | 7 ppb | | - | | - | |
| **Amount of comparative viscosifier** | - | | - | | 6 ppb | | 7 ppb | |
| **Mud weight (ppg)** | 12.8 | | 12.8 | | 13 | | 13 | |

| | BHR | AHR | BHR | AHR | BHR | AHR | BHR | AHR |
|---|---|---|---|---|---|---|---|---|
| **Plastic Viscosity (cP or 10⁻³ Pa.s)** | 24.5 | 24.9 | 31 | 30.4 | 31 | 29.6 | 32.4 | 32.7 |
| **Yield point (lb/100ft²)(Pa)** | 15.8 (7.57) | 17.5 (8.38) | 29 (13.89) | 31.3 (14.99) | 21.7 (10.39) | 29.6 (14.17) | 29.8 (14.27) | 40.3 (19.30) |
| **10-sec gel (lb/100ft²)(Pa)** | 7 (3.35) | 8.7 (4.17) | 10.1 (4.84) | 12.9 (6.18) | 13.6 (6.51) | 25.8 (12.35) | 17.6 (8.43) | 33.7 (16.14) |
| **10-min gel (lb/100ft²)(Pa)** | 9 (4.31) | 11.8 (5.65) | 12 (5.75) | 15.5 (7.42) | 20.5 (9.82) | 34.3 (16.42) | 25.3 (12.11) | 43.9 (21.02) |
| **ES at 120°F (V)** | 536 | 577 | 662 | 677 | 784 | 835 | 807 | 867 |

From the above data, it can be concluded that the PV, YP, and ES of the drilling fluids with viscosifier-3 according to the invention meet the expected specifications of drilling fluid without causing excess viscosity, unlike clay-based products. In contrast, clay with the same quality results in very high viscosity, requiring more pump pressure to drill. Additionally, the yield point of clay-based mud systems is very high, which may lead to progressive gelation, making it less suitable for drilling.

More particularly, it is evident that the PV & YP of drilling fluids with viscosifier--3 is within the expected ranges for both concentrations of BF1 & BF2. Importantly, the ES is higher than 350 volts and it ensures that the fluid emulsion is stable. Also, the gel strengths at 10 seconds and 10 minutes are very low in the compositions according to the invention (especially in comparison with composiitons with clay), ensuring a better pumpability of the drilling fluid during the operation over clay based product. At this same concentration, for the clay-based compositions, the measured viscosity is very high, thus exhibiting higher pumpability needs, and even leading sometimes to drilling issues because of these progressive gels. (Technical way of mentioning higher strength).

Lastly, with viscoisifier-3 according to the invention, the majority of the composition is biodegradable (up to 70%) and hence has a huge sustainability advantage in terms of carbon-footprint.

### Example 3.4.: Drilling fluids with viscosifier 4

| | **C13** | | **C14** | | **CC1** | | **CC2** | |
|---|---|---|---|---|---|---|---|---|
| **Base fluid** | BF1 | | | | | | | |
| **Amount of viscosifier 4 (invention)** | 6 ppb | | 7 ppb | | - | | - | |
| **Amount of comparative viscosifier** | - | | - | | 6 ppb | | 7 ppb | |
| **Mud weight (ppg)** | 13.2 | | 13.3 | | 13.2 | | 13.2 | |

| | BHR | AHR | BHR | AHR | BHR | AHR | BHR | AHR |
|---|---|---|---|---|---|---|---|---|
| **Plastic Viscosity (cP)** | 29.9 | 30.1 | 33.8 | 36.2 | 37.3 | 38.9 | 39.4 | 42.4 |
| **Yield point (lb/100ft²)(Pa)** | 20.9 (10.01) | 24.1 (11.54) | 30.8 (14.75) | 30 (14.36) | 21 (10.05) | 31.5 (15.08) | 25.1 (12.02) | 36.4 (17.43) |
| **10-sec gel (lb/100ft²)(Pa)** | 8.8 (4.21) | 9.8 (4.69) | 10.6 (5.08) | 11 (5.27) | 11.7 (5.60) | 26.7 (12.78) | 15 (7.18) | 34.4 (16.47) |
| **10-min gel (lb/100ft²)(Pa)** | 9.4 (4.50) | 11.4 (5.46) | 11.8 (5.65) | 12.1 (5.79) | 19.2 (9.19) | 36.6 (17.52) | 23.3 (11.16) | 46.6 (22.31) |
| **ES at 120°F (V)** | 403 | 595 | 491 | 634 | 752 | 818 | 803 | 901 |

| | **C15** | | **C16** | | **CC3** | | **CC4** | |
|---|---|---|---|---|---|---|---|---|
| **Base fluid** | BF2 | | | | | | | |
| **Amount of viscosifier 4 (invention)** | 6 ppb | | 7 ppb | | - | | - | |
| **Amount of comparative viscosifier** | - | | - | | 6 ppb | | 7 ppb | |
| **Mud weight (ppg)** | 12.8 | | 12.8 | | 13 | | 13 | |

| | BHR | AHR | BHR | AHR | BHR | AHR | BHR | AHR |
|---|---|---|---|---|---|---|---|---|
| **Plastic Viscosity (cP)** | 24.6 | 23.9 | 28.2 | 28 | 31 | 29.6 | 32.4 | 32.7 |
| **Yield point (lb/100ft²)(Pa)** | 16.8 (8.04) | 20.1 (9.62) | 27 (12.93) | 28 (13.41) | 21.7 (10.39) | 29.6 (14.17) | 29.8 (14.27) | 40.3 (19.30) |
| **10-sec gel (lb/100ft²) (Pa)** | 7.5 (3.59) | 9 (4.31) | 10.8 (5.17) | 12.8 (6.13) | 13.6 (6.51) | 25.8 (12.35) | 17.6 (8.43) | 33.7 (16.14) |
| **10-min gel (lb/100ft²) (Pa)** | 9 (4.31) | 12 (5.75) | 11.7 (5.60) | 13.9 (6.66) | 20.5 (9.82) | 34.3 (16.42) | 25.3 (12.11) | 43.9 (21.02) |
| **ES at 120°F (V)** | 425 | 525 | 496 | 621 | 784 | 835 | 807 | 867 |

Based on the above data, it appears that the PV & YP of drilling fluids including viscosifier-4 according the invention are good. ES is higher than 350 volts and it ensures that the fluid emulsion is stable.

Also, in contrast, clay products have very high gel strengths due to their nature of progressive gelation.

Lastly, composition with viscosifier-4 is partially biodegradable (up to 40%) and hence has a better sustainability advantage in terms of carbon-footprint.

## Claims

1. The use of a mixture of high molecular weight polymers as a viscosifier in a drilling formulation, wherein said mixture comprises:
- at least one hydrogenated polyfarnesene polymer having an average molar mass in number of at least 10,000 g/mol, and
- at least one olefin copolymer having an average molar mass in number of at least 1,000 g/mol.

2. The use of claim 1, wherein the hydrogenated polyfarnesene polymer has an average molar mass in number ranging from 10,000 g/mol to 120,000 g/mol, preferably from 20,000 g/mol to 90,000 g/mol, and more preferably from 50,000 g/mol to 80,000 g/mol.

3. The use of claim 1 or 2, wherein the hydrogenated polyfarnesene polymer is fully hydrogenated.

4. The use of any one of claims 1 to 4, wherein the olefin copolymer has an average molar mass in number greater than 2,000 g/mol.

5. The use of any one of claims 1 to 4, wherein the olefin copolymer has an average molar mass in number of at least 3,000 g/mol.

6. The use of any one of claims 1 to 5, wherein the olefin copolymer is an ethylene-propylene copolymer.

7. The use of any one of claims 1 to 6, wherein the mixture comprises from 30% to 80% by mass of the hydrogenated polyfarnesene polymer and from 20% to 70% by mass of the olefin copolymer, in relation to the total mass of said mixture, preferably from 40% to 70% by mass of the hydrogenated polyfarnesene polymer and from 30% to 60% by mass of the olefin copolymer, in relation to the total mass of said mixture.

8. The use of any one of claims 1 to 7, wherein the mixture comprises from 40% to 60% by mass of the hydrogenated polyfarnesene polymer and 40% to 60% by mass of the olefin copolymer, in relation to the total mass of said mixture, the mixture comprising preferably 50% by mass of the hydrogenated polyfarnesene polymer and 50% by mass of the olefin copolymer, in relation to the total mass of said mixture.

9. The use of any one of claims 1 to 8, wherein the drilling formulation comprises from 0.5% to 5%, preferably from 1% to 3%, and more preferably from 1.5% to 2%, by mass, of the mixture, in comparison to the total mass of said drilling formulation.

10. The use of any one of claims 1 to 9, wherein the drilling formulation comprises a base fluid selected from the group consisting of: synthetic base oils, bio-based fluids, and mixtures thereof.

11. The use of claim 10, wherein the base fluid is selected from the group consisting of:
- a base oil selected from the group consisting of: mineral, synthetic or natural, animal or vegetable oils, and mixtures thereof, in particular selected from the group consisting of oils of mineral or synthetic origin belonging to groups I to V according to the classes defined in the API classification;
- a fluid having a kinematic viscosity at 40°C from 3 to 6 mm²/s, a flash point of higher than 120°C and a pour point lower than -40°C, having a boiling point in the range of from 200°C to 400°C and a boiling range below 80°C, said fluid comprising more than 95% isoparaffins and less than 3% of naphthens by weight, a biocarbon content of at least 95% by weight, containing less than 100ppm aromatics by weight;
- a fluid having an initial boiling point in the range of from 150°C to 240°C and a final boiling point in the range of from 240°C to 300°C, said fluid comprising:
- from 70% to 95% by weight of isoparaffins, and
- from 30 to 600 ppm by weight of aromatics,
based on the total weight of the fluid,
said fluid comprising a biocarbon content of at least 95% by weight based on the total weight of the carbon atoms; and
- mixtures thereof.

12. The use of any one of claims 1 to 11, wherein the drilling formulation further comprises at least one additive, preferably the at least one additive is chosen among an emulsifier, an emulsion stabilizer, a salt, a viscosifier other than the high molecular weight polymers of claim 1, a suspending agent, a high temperature fluid loss additive, a wetting agent, a rheology modifier, a weighting agent, water, and mixtures thereof.

13. The use of any one of claims 1 to 12, wherein the drilling formulation comprises, based on the total mass of said drilling formulation:
- from 1% to 40% by mass of base fluid(s), preferably from 5 to 30%, by mass of base fluid(s),
- from 40% to 95% by mass of weighting agent(s), preferably from 50 to 90% by mass of weighting agent(s), the weighting agents being preferably barite,
- from 1% to 30% by mass of water, preferably from 2 to 20% by mass, of water,
- from 0.1% to 15% by mass of salt(s), preferably from 0.5 to 10% by mass of salt(s), at least salt being preferably calcium chloride,
- from 0.5% to 15% by mass of emulsifier(s), preferably from 1 to 10% by mass of emulsifier(s), and
- from 0.5% to 5%, preferably from 1% to 3%, and more preferably from 1.5% to 2%, by mass of the mixture of high molecular weight polymers as defined in any one of claims 1 to 8.
